Europäisches Patentamt

European Patent Office

Office européen des brevets

(11) Publication number: **0 215 549**
**A2**

# EUROPEAN PATENT APPLICATION

(21) Application number: 86305060.5

(22) Date of filing: 30.06.86

(51) Int. Cl.⁴: **B01D 13/04** , D01D 5/24

(30) Priority: 29.08.85 US 770857

(43) Date of publication of application:
25.03.87 Bulletin 87/13

(84) Designated Contracting States:
AT BE CH DE FR GB IT LI LU NL SE

(71) Applicant: BEND RESEARCH, INC.
64550 Research Road
Bend Oregon, 97701(US)

(72) Inventor: Babcock, Walter C.
19970 Tumalo Road
Bend Oregon 97702(US)

(74) Representative: Lawrence, Malcolm Graham
Malcolm Lawrence & Co. 9th Floor Terminus
House Terminus Street
Harlow Essex CM20 1XF(GB)

(54) Hollow fibre annealing.

(57) A process for improving the internal burst strengths of microporous polymeric hollow fibers useful in RO applications is disclosed, which comprises heat curing such fibers at temperatures not exceeding their glass transition temperatures for five minutes up to several hours.

EP 0 215 549 A2

## HOLLOW FIBER ANNEALING

This invention relates to a method for increasing the internal burst pressures of microporous polymeric hollow fibers.

The use of lumen-side feed inside-skinned polymeric composite hollow fiber membranes for reverse osmosis applications is disclosed in commonly-assigned U.S. Application Serial No. 702,421 filed February 13, 1985. In reverse osmosis (RO) applications, the internal burst pressures of the hollow fiber supports of composite membranes constitute a critical factor in the performance of the fibers; in general, the higher the internal burst pressure of a given hollow fiber support, the better the RO performance of the composite membrane will be. In RO applications for desalination of sea water, for example, due to the high osmotic pressure of sea water itself, dynamic or operating pressures in the neighborhood of 800 psi are required. However, with conventional casting techniques, hollow fibers with operational burst strengths of only around 400 psi are obtainable.

There is therefore a need in the art for hollow fibers capable of greater operational internal burst pressures than are obtainable with conventional casting techniques. This need and others are met by the process of the present invention, which is summarized and described in detail below.

The present invention comprises a process for increasing the internal burst pressures of microporous polymeric hollow fibers comprising heating such fibers at temperatures approaching, but not exceeding, the glass transition temperatures of the polymers the fibers are made of.

According to the present invention, both the static and dynamic internal burst pressure, or pressure at which a microporous polymeric hollow fiber will burst when pressure is applied to the inside or lumens of such a fiber, has been found to be greatly increased by heating such fibers for a period of time at temperatures not exceeding the glass transition temperature of the polymer from which the fiber is made.

Typically, such microporous polymeric hollow fibers are made of polymers such as polysulfones, polyethersulfones, polyphenylsulfones, polyvinylidenefluorides, polyimides and polyetherimides by spin casting techniques known in the art and generally comprising forcing a solution of fiber-forming polymer with a pore-forming material through a tube-in-orifice spinnerette having a lumen-forming liquid such as water simultaneously forced through the tube of the spinnerette so as to define a bore or lumen for the fiber. Glass transition temperatures of many such polymers are known. See, for example, Brandrup, et al., _Polymer Handbook_, Vol. 3, pp. 139-179 (1975). Table I below indicates the glass transition temperatures for the types of polymers mentioned above.

TABLE I

| Polymer | Glass Transition Temperatures |
|---|---|
| Polysulfone | 180°C |
| Polyethersulfone | 220°C |
| Polyphenylsulfone | 190°C |
| Polyvinylidenefluoride | 141°C |
| Polyimide | 314°C |
| Polyetherimide | 217°C |

The glass transition temperature of a given polymer is empirically ascertainable by a dilatometer, which is capable of monitoring the change in volume of a polymer as a function of temperature.

Although the glass transition temperature of a given polymer comprises the maximum temperature at which the hollow fibers should be heated, improved internal burst strengths are obtainable even at temperatures as low as 50°C. In general, the preferred temperature range is from 50°C below the glass transition temperature up to the glass transition temperature.

Heating times may vary widely from as little as five minutes up to five hours. However, most improvement in burst strength seems to be acheived within an hour, with little improvement observed beyond that time.

EXAMPLES

Microporous polysulfone (PS) and polyethersulfone (PES) hollow fibers were spun from a dope comprising 30 wt% polymer and 20 wt% methyl-Cellosolve® in dimethylacetamide with lumen and external quench solutions of water. Static internal burst pressures were ascertained by forming a loop of the hollow fiber by connecting both ends to a common "T" fitting on a static hydraulic water pressure valve and pressurizing the inside of the fiber at a rate which increased about 10 psi per second until the fiber actually burst. Heat curing took place at the temperatures and for the times indicated. The results are reported in Table II.

## TABLE II

| Fiber | Initial Burst Pressure (psi) | Curing Temp. (°C) | Curing Time (°C) | Final Burst Pressure (psi) |
|-------|------------------------------|-------------------|------------------|----------------------------|
| PS | 775 | 100 | 10 | 800 |
| PS | 775 | 125 | 10 | 810 |
| PS | 775 | 150 | 10 | 840 |
| PS | 775 | 160 | 10 | 860 |
| PS | 775 | 180 | 10 | 900 |
| PES | 1040 | 160 | 10 | 1150 |
| PES | 1040 | 160 | 20 | 1155 |
| PES | 1040 | 160 | 40 | 1200 |
| PES | 1040 | 160 | 60 | 1200 |
| PES | 1040 | 160 | 120 | 1200 |

The RO performance of the heat-cured hollow fibers shown in Table II was studied by forming a salt-rejecting film on the lumens of such fibers and feeding a 5000 ppm NaCl aqueous solution at various pressures between 800 and 1000 psi and 25°C through the lumens of the so-formed composite hollow fiber membranes for periods of 10 minutes. The fibers were tested through 100 such pressurization cycles and none of the composite membranes with heat-cured fiber supports burst. As compared to composite membranes with non-heat cured fiber supports, salt rejection of the heat-cured membranes remained basically the same--quite high at 96% and 98%--and the flux for such membranes remained substantially the same as well. RO composite membranes with annealed hollow fiber supports thus are quite well suited for desalination of sea water and other waste waters requiring operating pressures in the neighborhood of 800 psi.

The terms and expressions which have been employed in the foregoing specification are used therein as terms of description and not of limitation, and there is no intention, in the use of such terms and expressions, of excluding equivalents of the features shown and described or portions thereof.

**Claims**

1. A process for increasing the internal burst pressure of a microporous polymeric hollow fiber charaterized in that said fiber is heated at a temperature not exceeding the glass transition temperature of the polymer from which said fiber is made.

2. A process as claimed in claim 1 wherein said fiber is made from a polysulfone, polyethersulfone, polyphenylsulfone, polyvinylidenefluoride, polyimide or polyetherimide and wherein the heating is conducted for a period of time not exceeding about 5 hours.

3. A process as claimed in Claim 1 or Claim 2 wherein said fiber is made from polysulfone, the heating temperature is from 100°C to 180°C land the duration of heating is 5 to 120 minutes.

4. A process as claimed in Claim 1 or Claim 2 wherein said fiber is made from polyethersulfone, the heating temperature is from 140°C to 180°C and the duration of heating is 5 to 120 minutes.

5. A lumen-side feed inside-skinned polymeric composite hollow fiber reverse osmosis membrane wherein the hollow fiber supports are polymer fibers which have been heated at a temperature not exceeding the glass transition temperature of the fiber polymer.

6. Marine water desalination wherein reverse osmosis is effected by means of a membrane as claimed in Claim 5.